# EUROPEAN PATENT APPLICATION

(11) **EP 0 909 002 A2**
(43) Date of publication of application: **14.04.1999**
(21) Application number: 98203376.3
(22) Date of filing: 06.10.1998
(51) Int. Cl.: H02K 1/18, H02K 16/00, B63H 25/42

(54) **Modular electrical rotating machine with facilitated removal of the windings**

(30) Priority: 06.10.1997 IT MI972271
(71) Applicant: ABB Sistemi Industriali SpA, 20099 Sesto San Giovanni (MI) (IT)
(72) Inventor: Sozzi, Luigi, 27051 Cava Manara (PV) (IT)
(74) Representative: Giavarini, Francesco

(57) **Abstract**

The present invention relates to a modular electrical rotating machine that comprises:
- one or more sub-motors, each of said sub-motors comprising a stator divided into a plurality of magnetic stator units and a rotor, and
- a casing forming the housing of said electrical rotating machine characterised by the fact that it comprises
   means for fixing said magnetic stator units to said casing, said fixing means enabling the release and removal in an axial direction of said magnetic stator units from any circumferential position.

## Description

The present invention relates to a system for fitting and removing modular electrical rotating machines, in particular of the magnetic stator units.

The windings in three phase or multiphase electrical rotating machines of conventional type are housed in magnetic units made from circular magnetic plates packed to form a compact stator unit. With these machines it is impossible to operate on the stator part without completely disassembling the machine in the event of faults or to perform maintenance operations. This represents a significant disadvantage when the machine is housed in very restricted spaces and where it is difficult and laborious, if not actually impossible, to disassemble or remove the machine (for example machines for submarines, motors housed in POD type propulsion modules, machines for off-shore use, etc.).

In modular machines with permanent magnets or variable reluctance machines, it is possible to remove the individual units in case of a fault in the windings contained in them since the stator part is formed by individual magnetic units that are independent from one another. Moreover, any fault is limited to the unit concerned, enabling the machine to operate in all cases, contrarily to what happens with the conventional machines, where even the smallest local fault affects the entire stator winding.

An example of a modular machine is described in the technical publication *"Novel technologies with PM-machines for ship propulsion"* (M. Radaelli, L. Sozzi, ABB Industria, 1997, Sesto S. Giovanni-MI), regarding multielectronic permanent magnet machines. In particular, this article describes a machine formed by four sub-motors and refers to the possibility of removing the windings from the frontal top part of the motor. For this purpose it is necessary to have two casings, with an inner casing that can be rotated in such a way as to bring the stator section affected by the fault into a suitable position to be able to proceed to remove the magnetic stator unit through the outer casing. This solution, although advantageous compared to the rotating machines of conventional type, has the disadvantage of limiting the possibility of operating on and removing a magnetic stator unit to a specific position. A further disadvantage is due to the presence of two casings and the complicated and delicate means for moving the inner casing in relation to the outer one. In addition, the operation of positioning the inner casing and subsequently removing the magnetic stator unit requires very long execution times.

The main task of the present invention is to provide an electrical rotating machine that allows easy removal of the magnetic stator units.

As part of this task, one object of the present invention is to provide an electrical rotating machine in which removal of the magnetic stator units is possible from any circumferential position.

Another object of the present invention is to provide an electrical rotating machine that has very low maintenance operation times.

A further but not the last object of the present invention is to provide an electrical rotating machine that offers high reliability and is relatively easy to manufacture at competitive costs.

This task together with these and other objects that shall emerge more clearly hereinafter are achieved by a modular electrical rotating machine comprising:
- one or more sub-motors, each of said sub-motors comprising a stator divided into a plurality of magnetic stator units and a rotor, and
- a casing forming the housing of said electrical rotating machine, characterised by the fact that it comprises means for fixing said magnetic stator units to said casing, said fixing means enabling the release and removal in an axial direction of said magnetic stator units from any circumferential position. In this way the operation for removing said magnetic units is particularly easy and only requires the removal of the shields where present. In particular, each sub-motor may itself constitute a rotating electric generator or a rotating electric motor.

Further characteristics and advantages of the invention shall emerge from the description of a preferred but not exclusive embodiment of the electrical rotating machine as in the invention, illustrated purely by way of example and without limitation in the attached drawings, in which:
figure 1 shows a longitudinal section of a modular electrical rotating machine with permanent magnet including two stator rings;
figure 2 shows a complete cross section of the modular electrical rotating machine with permanent magnet illustrated in Figure 1;
figure 3 shows a detail of the cross section of Figure 2;
figure 4 shows a longitudinal section of two magnetic stator units fixed to the casing in accordance with a first embodiment;
figure 5 shows a partial cross section illustrating the fixing of a magnetic stator unit to the casing in accordance with this first embodiment;
figure 6 shows a longitudinal section of two magnetic stator units fixed to the casing in accordance with a second embodiment;
figure 7 shows a partial cross section of the fixing of a magnetic stator unit to the casing in accordance with this second embodiment;
figure 8 shows a view in perspective of the spacer module;
figure 9 shows one possible use of the electrical rotating machine as in the invention in a propulsion and steering module for naval ship; and
figure 10 shows a view from above of the propulsion and steering module for naval ship of Figure 9.

With reference, at this point in greater detail, to the aforesaid figures, the modular electrical rotating machine with permanent magnet comprises a casing 1 in which a cooling circuit 27 is provided and two sub-motors, each of said sub-motors featuring a stator 2 divided into a plurality of magnetic stator units fixed to the casing 1 and a rotor 3, on the outer surface of which the plates 5 that house the permanent magnets 4 forming the rotor pole ring are positioned.

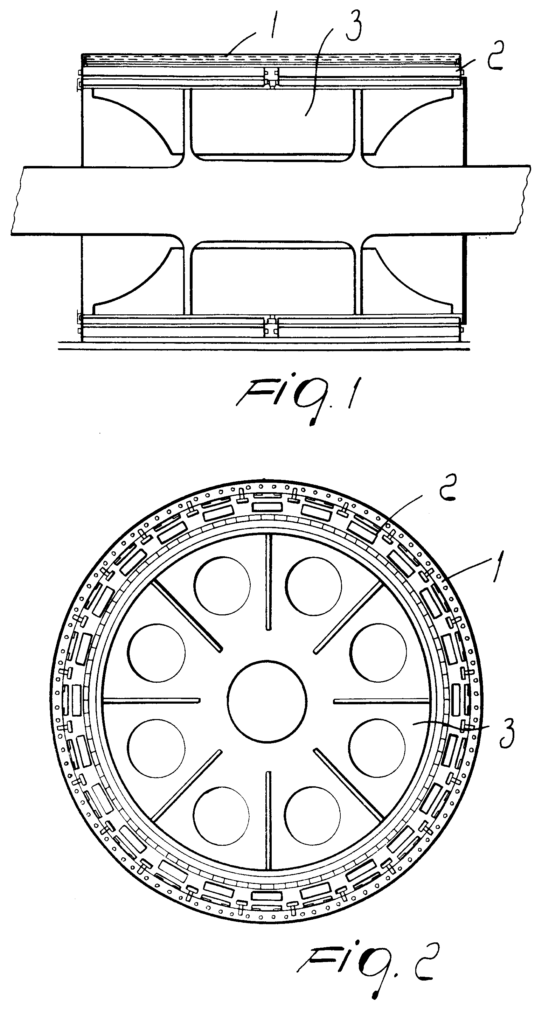

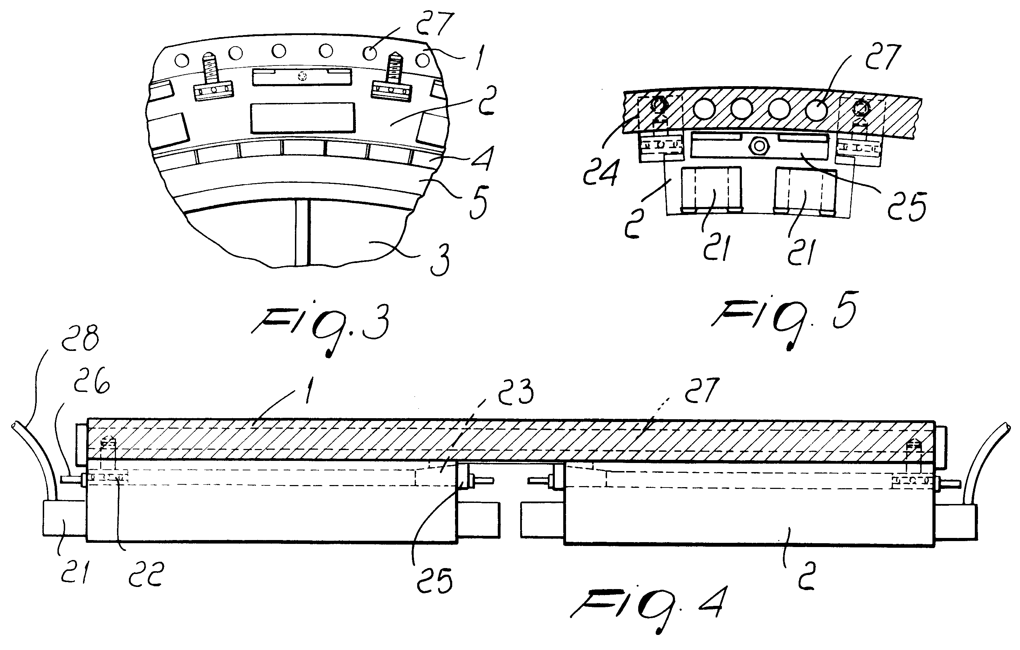

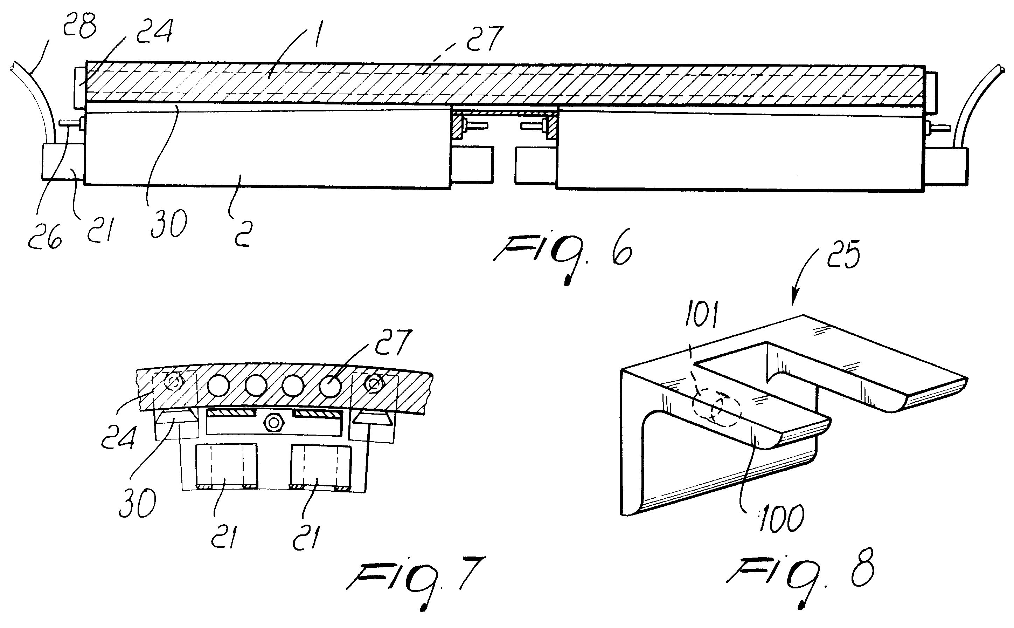

In particular, figures 4 and 5 show a first preferred embodiment of the fixing system as in the present invention. In this embodiment a magnetic stator unit 2, featuring a winding 21 connected to the connection cable 28, is fixed to the casing 1 using internal guiding means 23, guiding and locking means 22 and an external clamping means 24. The internal guiding means 23, constituted of guide blocks welded to the casing 1 in the embodiment illustrated, enable the magnetic stator unit 2 to slide longitudinally in relation to the casing 1. The guiding and locking means 22, constituted of blocks with a threaded stem and a base featuring recesses for a disassembling tool in the embodiment illustrated, are screwed to the casing 1 in such a way as to lock the magnetic stator unit 2. The external clamping means 24, constituted of a prismatic-shaped block in the embodiment illustrated, are screwed to the casing 1 and complete the fixing of the magnetic stator unit 2 to the casing 1. A spacer module 25 and a tie rod with lock nuts 26 are joined to the magnetic stator unit 2.

In case of removing of a magnetic stator unit, one removes the clamping block 24, loosens the block 22 so that it acts as a guide for the sliding of the magnetic stator unit 2, screws a suitable tool onto the threaded end of the tie rod 26 joined to the magnetic stator unit 2 and extracts the latter. The internal guide block 23 can be appropriately made with a wedge-shaped section. This block 23, fixed to the casing with the wedge-shaped section in a longitudinal direction, constitutes a further locking means in addition to guiding means once coupled to the inner end of a magnetic stator unit 2.

With reference to Figures 6 and 7, a second embodiment of the fixing system for the rotating machine as in the invention is shown.

In this embodiment a magnetic stator unit 2, featuring a winding 21 connected to the connection cable 28, is fixed to the casing 1, in which a cooling circuit is provided, by means of a dovetail guide with a wedge-shaped longitudinal section 30 and by an external clamping means 24. Coupled to the magnetic stator unit 2 by means of a rail with a wedge-shaped longitudinal section, the guide 30 constitutes a continuous guiding and fixing element for fixing the magnetic stator unit 2 to the casing 1. The external clamping means 24 screwed to the casing 1 complete the fixing of the magnetic stator unit 2 to the casing 1. These clamping means 24 have a similar shape to the solution described previously. The spacer module 25 and the tie rod with lock nut 26 are joined to the magnetic stator unit 2.

In case of removing of a magnetic stator unit, one removes the clamping block (24), screws a suitable tool onto the threaded end of the tie rod 26 coupled to the magnetic stator unit 2 and extracts the latter making it slide in relation to the casing l on the wedge-shaped dovetail guide 30.

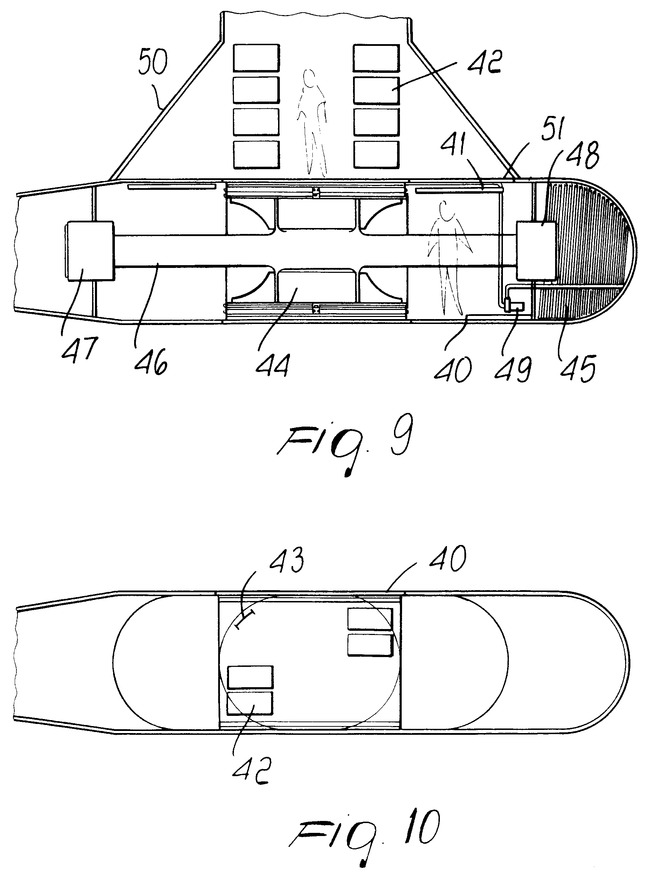

Figure 8 shows a preferred embodiment of the spacer module 25, which has an L shape with one of the two sides having a U section 100 and the other featuring the hole 101 for joining to the tie rod 26.

With reference to Figures 9 and 10, a possible application of a modular electrical rotating machine as in the invention is shown, in this case a permanent magnet multielectronic motor in a propulsion and steering module for naval ship. This propulsion and steering module comprises a watertight submerged pod 40 and a substantially vertical support 50, the bottom part of which is joined to the pod 40 and the top part of which is connected to the hull of the naval ship in such a way as to be able to rotate in relation to the longitudinal axis of the hull.

A cooling circuit is housed inside the pod, comprising a pump 49 and a heat exchanger 45 and the high-power (approximately 15 MW at 150 rpm) permanent magnet multielectronic motor 44 whose transmission shaft 46 is associated with a thrust bearing 48 and a supporting bearing 47. The electronic power modules 42 and means of access 43 for personnel are housed inside the support 50.

In order to ensure that the inside of the pod 40 can be inspected and that the magnetic stator units can be removed, also during navigation, the casing of the pod 40 features holes 51 that bring the inside of the pod 40 into communication with the inside of the support 50. In particular, Figure 9 shows a magnetic stator unit in the removed position 41. Housing the electronic power modules 42 inside the support 50 enables further space to be free inside the ship and makes it possible to have only two conductors (DC buses) between the hull of the ship and the rotating part (pod and support) for transmitting electricity compared to the 5 or 8 necessary for the synchronous motors of conventional type and compared to the 6 required for the permanent magnet motors of conventional type with the electronics housed inside the hull. In addition to the advantages described above, the use of a permanent magnet multielectronic motor in applications of this type has the advantage of high efficiency even at low motor speeds in that it is possible to operate only a part of the magnetic units and the related power supply electronics at low powers.

The same principle, shown by way of example in modular rotating machines with two stator rings, can be applied to suit the power required to a modular electrical rotating machine with a sub-motor and, with suitable modifications, to modular electrical rotating machines with several sub-motors. By way of example, not illustrated in the figures, in the case of an electrical rotating machine with four submotors, two inner and two outer, the magnetic units of the two inner stator rings are connected to connection cables housed in suitable seatings made in the casing.

The connection between the connection cables and the electrical power supply system is made on the front part of the machine. In case of removing of a magnetic unit of an inner stator ring, one removes the corresponding magnetic unit in the outer stator ring, connects a guide cable to the connection cable of said inner magnetic unit and removes the magnetic unit allowing the connection cable and guide cable to slide in the seating made in the casing. One subsequently inserts the magnetic inner unit in the inner stator ring again and repositions the connection cable in its original seating, removing the guide cable from it. The system proposed is highly flexible in that having all the connections on the front part it allows to make connections in series, in parallel and in series/parallel between the various windings, irrespective of the number of sub-motors forming the modular electrical rotating machine. This makes it possible to size the machine from both an electronic and mechanical standpoint to suit the requirements related to the power supply system and space available.

The fixing system as conceived is capable of numerous modifications and variants that are all within the inventive concept; moreover, all the details may be substituted by other technically equivalent elements. In practice, the dimensions and materials used can be of any kind to suit the requirements of the state of technology providing they are compatible with the specific use.

## Claims

1. Modular electrical rotating machine comprising:
- one or more sub-motors, each of said sub-motors comprising a stator divided into a plurality of magnetic stator units and a rotor, and
- a casing forming the housing of said electrical rotating machine, characterised by the fact that it comprises means for fixing said magnetic stator units to said casing, said fixing means enabling the release and removal in an axial direction of said magnetic stator units from any circumferential position.

2. Modular electrical rotating machine as in claim 1 characterised by the fact that said fixing means comprise at least one internal means for said magnetic stator units fixed to said casing, at least one locking and guiding means for said magnetic stator units fixed to said casing, at least one external clamping means fixed to said casing and at least one tie rod with lock nuts.

3. Modular electrical rotating machine as in one or more of the previous claims characterised by the fact that said at least one internal guide means are a block with wedge-shaped section fixed to said casing.

4. Modular electrical rotating machine as in one or more of the previous claims characterised by the fact that said fixing means comprise at least one dovetail guide with a wedge-shaped longitudinal section fixed to said casing, at least one external clamping means fixed to said casing and at least one tie rod with lock nuts.

5. Variable reluctance modular electrical rotating machine as in one or more of the previous claims characterised by the fact that it comprises one or more of the characteristics described and/or illustrated.

6. Electrical rotating machine as in claim 1 characterised by the fact of being a modular electric motor.

7. Electrical rotating machine as in claim 1 characterised by the fact of being a modular rotating electric generator.

8. Propulsion and steering module for naval ship comprising a submerged watertight pod, a substantially vertical support, the bottom part of which is fixed to said pod and the top part of which is connected to the hull of said naval ship in such a way as to be able to rotate in relation to the longitudinal axis of the hull, said pod containing a cooling circuit including a pump and a heat exchanger, said support including electronic power modules and means of access to said support, characterised by the fact of comprising a modular electrical rotating motor as in claim 6.
